# EUROPÄISCHE PATENTANMELDUNG

(11) **EP 3 200 419 A1**
(43) Veröffentlichungstag der Anmeldung: **02.08.2017**
(21) Anmeldenummer: 16152807.0
(22) Anmeldetag: 26.01.2016
(51) Int. Cl.: H04L 29/06, H04L 29/08, G05B 9/03, G05B 19/042, G05B 19/418

(54) **AUTOMATISIERUNGSNETZWERK MIT EINER SICHERHEITSÜBERWACHUNG SOWIE DATENVERARBEITUNGSGERÄT UND ÜBERWACHUNGSVERFAHREN FÜR EIN AUTOMATISIERUNGSNETZWERK**

(71) Anmelder: Siemens Aktiengesellschaft, 80333 München (DE)
(72) Erfinder: Lutz, Benjamin, 76327 Pfinztal (DE); Palmin, Anna, 76187 Karlsruhe (DE)

(57) **Zusammenfassung**

Die Erfindung betrifft ein Automatisierungsnetzwerk (1) mit einer Sicherheitsüberwachung, in welchem zumindest ein Datenverarbeitungsgerät (4) dazu ausgebildet ist, bei sicherheitsrelevanten Ereignissen entsprechende Meldungen zu erzeugen. Zudem betrifft die Erfindung ein Datenverarbeitungsgerät (4) sowie ein Verfahren zur Sicherheitsüberwachung in einem Automatisierungsnetzwerk (1). Eine Firmware (8) des Datenverarbeitungsgeräts (4) weist eine durch ein Anwenderprogramm (7) aufrufbare Funktion (12) zur Erzeugung von Meldungen bei sicherheitsrelevanten Ereignissen auf. Das hat den Vorteil, dass das Anwenderprogramm (7) in die Sicherheitsüberwachung einbezogen wird und die Erzeugung von Meldungen bei sicherheitsrelevanten Ereignissen durch den Anwender flexibler gestaltet werden kann.

## Beschreibung

Die Erfindung betrifft ein Automatisierungsnetzwerk mit einer Sicherheitsüberwachung, wobei in dem Automatisierungsnetzwerk mehrere Datenverarbeitungsgeräte zur Datenkommunikation miteinander verbunden sind, gemäß dem Oberbegriff des Anspruchs 1 sowie ein Datenverarbeitungsgerät und ein Verfahren zur Überwachung der Sicherheit eines derartigen Automatisierungsnetzwerks.

Industrielle Automatisierungsnetzwerke bestehen aus Sicht der Datenverarbeitung aus einem Datennetzwerk sowie aus Datenverarbeitungsgeräten, welche zur Durchführung einer Datenkommunikation durch das Datennetzwerk miteinander verbunden sind. Automatisierungsnetzwerke können, zum Beispiel um eine Bedienung einer durch das Automatisierungsnetzwerk automatisierten industriellen Anlage von einer entfernten Station zu ermöglichen, beispielsweise mittels eines Gateways an ein öffentliches Netzwerk, zum Beispiel Internet, angebunden sein. Aufgrund ihrer diversen Vorteile bei der Realisierung moderner Automatisierungsnetzwerke werden verstärkt IT-Technologien wie Ethernet und das Internetprotokoll (IP) eingesetzt. Das führt jedoch zu einer Erhöhung der Sicherheitsrisiken, beispielsweise durch unberechtigte Eingriffe von außen in das jeweilige Automatisierungsnetzwerk.

In der EP 2 908 195 A1 sind Maßnahmen zur Verbesserung der Sicherheit in industriellen Automatisierungsnetzwerken beschrieben. Eine der wesentlichen Maßnahmen im Rahmen eines Security Managements ist die Erfassung und Auswertung von Meldungen, die verschiedene Datenverarbeitungsgeräte des Automatisierungsnetzwerks bei sicherheitsrelevanten Ereignissen erzeugen und die möglicherweise einen Angriff erkennen lassen. Eine übergeordnete Einheit sammelt die Meldungen und wertet diese aus, um aus den gemeldeten Einzelereignissen oder einer Zusammensetzung mehrerer Ereignisse zu erkennen, ob ein Angriff tatsächlich stattfindet, und gegebenenfalls diesen an eine Stelle zu melden, damit beispielsweise durch Bedienpersonal geeignete Maßnahmen als Reaktion auf den erkannten Angriff eingeleitet werden können. Diese Funktionalität wird als Security Event Management (SEM) bezeichnet. Eine weitere Funktionalität betrifft die Erzeugung von Berichten, um beispielsweise das Einhalten von Richtlinien nachzuweisen. Diese wird als Security Information Management (SIM) bezeichnet. Vereint eine Einheit die beiden genannten Funktionalitäten, so wird sie als Security Information and Event Management (SIEM) bezeichnet. Eine Recheneinheit mit einem Software-Werkzeug, welches in einem Automatisierungsnetzwerk zur Realisierung eines SIEM dient, wird in der oben genannten EP 2 908 195 A1 als Security Station benannt.

Das Software-Werkzeug der Security Station dient zur Überwachung der Sicherheit in dem Automatisierungsnetzwerk, und zwar anhand einer Erfassung und Auswertung von Meldungen, welche eine Bedieneinheit, häufig als Operator Station bezeichnet, eine speicherprogrammierbare Steuerung, ein so genannter Controller, Netzwerkkomponenten, zum Beispiel Router, Switches oder Gateways, oder Feldgeräte, zum Beispiel Stellglieder oder Messumformer für Druck, Temperatur oder Durchfluss, erzeugen. Diese Geräte werden hier verallgemeinert als Datenverarbeitungsgeräte bezeichnet und erzeugen aufgrund ihrer entsprechenden Vorkonfigurierung bei sicherheitsrelevanten Ereignissen diesen entsprechende Meldungen. Beispiele für sicherheitsrelevante Ereignisse sind ein erkannter fehlgeschlagener Anmeldeversuch an einem PC, der im Windows Event Log erfasst wird, oder ein erkannter unberechtigter Zugriff auf eine IP-Adresse, der durch eine Firewall abgewehrt und gegebenenfalls in eine Log-Datei geschrieben wird.

Mit Hilfe des SIEM-Systems können somit sicherheitsrelevante Ereignisse anhand der empfangenen Meldungen in Echtzeit quasi online erfasst und langfristig gespeichert werden. Unter Verwendung von so genannten Correlation Rules werden die Meldungen ausgewertet, um Hinweise auf mögliche Angriffe und Abweichungen vom normalen Betrieb des Automatisierungsnetzwerks abzuleiten. Zudem können grobe Hinweise auf mögliche Ursachen von Security-Vorfällen anhand der gespeicherten Meldungen im Nachhinein, quasi offline, durch eine forensische Auswertung von sicherheitsrelevanten Ereignissen und eventuell anderer Informationen aus dem Automatisierungsnetzwerk ermittelt werden.

Meldungen werden bei sicherheitsrelevanten Ereignissen in Datenverarbeitungsgeräten des Automatisierungsnetzwerks bisher in der Firmware der Datenverarbeitungsgeräte erzeugt. Nach Auftreten sicherheitsrelevanter Ereignisse können entsprechende Meldungen je nach Konfiguration des jeweiligen Datenverarbeitungsgeräts an eine oder mehrere parametrierbare SIEM-Server-Adressen gesendet werden. Für den Fall, dass kein SIEM-Server für das Datenverarbeitungsgerät über das Datennetzwerk erreichbar ist, werden die erkannten sicherheitsrelevanten Ereignisse lediglich in einem internen Speicher des Datenverarbeitungsgeräts, einem so genannten Security Event Puffer, gespeichert, dessen Kapazität beispielsweise auf dreitausend Ereignisse begrenzt ist. Nach Wiederherstellung der Erreichbarkeit des SIEM-Servers kann ein Überlauf des Security Event Puffers ebenfalls als Ereignis dem SIEM-Server gemeldet werden. Beispielsweise wenn in einem Automatisierungsnetzwerk nur ein SIEM-Server eingesetzt wird, kann die Zuverlässigkeit des Monitorings und die Qualität der Sicherheitsüberwachung als unzureichend angesehen werden, da aufgrund einer instabilen Kommunikationsverbindung zum SIEM-Server oder aufgrund eines Ausfalls des SIEM-Servers Meldungen sicherheitsrelevanter Ereignisse verloren gehen können, insbesondere wenn zuvor die Speicherkapazität des Security Event Puffers überschritten wurde.

Zudem gibt es bisher neben der Erzeugung von Meldungen sicherheitsrelevanter Ereignisse in der Firmware keine Möglichkeit für den Anwender des Automatisierungsnetzwerks, bei sicherheitsrelevanten, auf die jeweilige Applikation bezogenen Ereignissen entsprechende Meldungen für eine Sicherheitsüberwachung zu erzeugen. Auch in dieser Hinsicht kann die Qualität der Sicherheitsüberwachung als unzureichend angesehen werden.

Der Erfindung liegt die Aufgabe zugrunde, die Qualität der Sicherheitsüberwachung weiter zu verbessern.

Zur Lösung dieser Aufgabe weist das neue Automatisierungsnetzwerk mit einer Sicherheitsüberwachung die in Anspruch 1 sowie das neue Datenverarbeitungsgerät und Verfahren zur Überwachung der Sicherheit in einem Automatisierungsnetzwerk die in Anspruch 4 bzw. 5 angegebenen Merkmale auf. In den abhängigen Ansprüchen sind vorteilhafte Weiterbildungen der Erfindung, in Anspruch 6 ein Computerprogramm und in Anspruch 7 ein Computerprogrammprodukt beschrieben.

Die Erfindung hat den Vorteil, dass für den Anwender des Automatisierungsnetzwerks die Möglichkeit besteht, in seinem Anwenderprogramm beispielsweise das Verhalten der automatisierten Anlage zu überwachen, bei auffälligem Verhalten ein möglicherweise sicherheitsrelevantes Ereignis zu detektieren und entsprechende Meldungen zu erzeugen. Die Flexibilität bei der Gestaltung der Sicherheitsüberwachung wird dadurch deutlich erhöht und es können zusätzliche Typen sicherheitsrelevanter Ereignisse, die bisher nicht detektierbar waren, nun in die Überwachung einbezogen werden. Hiermit ist es beispielsweise möglich, Parameteränderungen von Reglern, die in einem Anwenderprogramm überwacht werden, auf ein unzulässiges Überschreiten vorgegebener Grenzen als sicherheitsrelevantes Ereignis zu prüfen, gegebenenfalls entsprechende Meldungen zu erzeugen und diese in einem Speicher dauerhaft zu hinterlegen. Dadurch, dass die Erzeugung von Meldungen bei sicherheitsrelevanten Ereignissen durch eine in der Firmware des Datenverarbeitungsgeräts realisierte Funktion ausgeführt ist, wird in vorteilhafter Weise gewährleistet, dass die damit erzeugten Meldungen wie die bisher bereits in der Firmware erzeugten Meldungen in einheitlicher Form erscheinen und die Möglichkeit der Manipulation der Meldungserzeugung erschwert wird. Zur Aktivierung einer in Firmware realisierten Meldungserzeugung muss durch den Anwender bei dieser Ausgestaltung lediglich ein Funktionsaufruf in das Anwenderprogramm aufgenommen werden, der beispielsweise als "SetSecurityEvent-()" bezeichnet werden kann. Der Funktionsaufruf "SetSecurityEvent()" ist vorteilhaft applikativ skalierbar, das heißt, er kann im Anwenderprogramm flexibel an den Stellen eingesetzt werden, die für eine spätere forensische Auswertung von Bedeutung sein könnten. Das Anwenderprogramm wird somit vorteilhaft in die Generierung von Meldungen bei sicherheitsrelevanten Ereignissen mit einbezogen. Ergänzend zu den bisher in der Firmware erzeugten Meldungen bei sicherheitsrelevanten Ereignissen können somit aus dem Automatisierungscode heraus weitere Meldungen erzeugt werden, um eine verbesserte Basis für eine Auswertung zu erzielen, die online oder offline im Nachhinein durchgeführt werden kann.

Gemäß einer besonders vorteilhaften Weiterbildung der Erfindung wird zur Hinterlegung der aus dem Anwenderprogramm heraus erzeugten Meldungen derselbe Speicher genutzt, der auch zur Abspeicherung der auf herkömmliche Weise allein durch die Firmware erzeugten Meldungen verwendet wird. Dies vereinfacht die Realisierung des Speichers und des Zugriffs auf die bei sicherheitsrelevanten Ereignissen insgesamt erzeugten Meldungen. Eine getrennte Abspeicherung der Meldungen, die aufgrund von Aufrufen durch das Anwenderprogramm erzeugt wurden, und von Meldungen, die alleine durch die Firmware bei durch die Firmware erfassten sicherheitsrelevanten Ereignissen erstellt wurden, ist somit nicht erforderlich.

Damit selbst bei Totalausfall die durch ein Datenverarbeitungsgerät erzeugten Meldungen verfügbar bleiben, kann vorteilhaft das Datenverarbeitungsgerät, welches die Meldungen erzeugt und lokal abspeichert, diese an zumindest ein weiteres Datenverarbeitungsgerät übertragen, welches einen Speicher zur dauerhaften Abspeicherung empfangener Meldungen aufweist. Damit wird eine verbesserte forensische Auswertung der Meldungen ermöglicht, da durch die Verteilung oder Vervielfachung der Meldungsarchive auch bei Ausfall bestimmter Anlagenteile die Meldungsdaten verfügbar bleiben. Die Informationen können nicht mehr beispielsweise aufgrund einer instabilen Verbindung zu einem SIEM-Server oder bei Ausfall eines SIEM-Servers verloren gehen.

Wird aufgrund einer Auswertung der Meldungen oder durch die Meldungen direkt ein Sicherheitsproblem in dem Automatisierungsnetzwerk erkannt, so wird vorzugsweise ein entsprechendes Warnsignal zur Anzeige eventuell erforderlicher Wartungsmaßnahmen unmittelbar auf einem Servicegerät ausgegeben, damit ein Servicetechniker bereits vor Ort geeignete Anweisungen zur Durchführung der Wartungsarbeiten, beispielsweise zum Austausch eines mit Malware infizierten Datenverarbeitungsgeräts, erhält.

Ein Verfahren zur Überwachung der Sicherheit des Automatisierungsnetzwerks ist bevorzugt in Software oder einer Kombination Soft-/Hardware implementiert, so dass die Erfindung auch ein Computerprogramm mit durch einen Computer ausführbaren Programmcodeanweisungen zur Implementierung des Verfahrens betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm ist bevorzugt Bestandteil eines Datenverarbeitungsgeräts in dem Automatisierungsnetzwerk oder wird in einem Speicher der Elektronik eines Datenverarbeitungsgeräts vorgehalten oder ist in diesen Speicher ladbar, so dass beim Betrieb des Datenverarbeitungsgeräts die Sicherheitsüberwachung nach dem Verfahren automatisch ausgeführt wird.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: ein Blockschaltbild eines Automatisierungsnetzwerks und
- Figur 2: ein Blockschaltbild eines Datenverarbeitungsgeräts mit einem Langzeitspeicher für Meldungen.

In den Figuren sind gleiche Teile mit gleichen Bezugszeichen versehen.

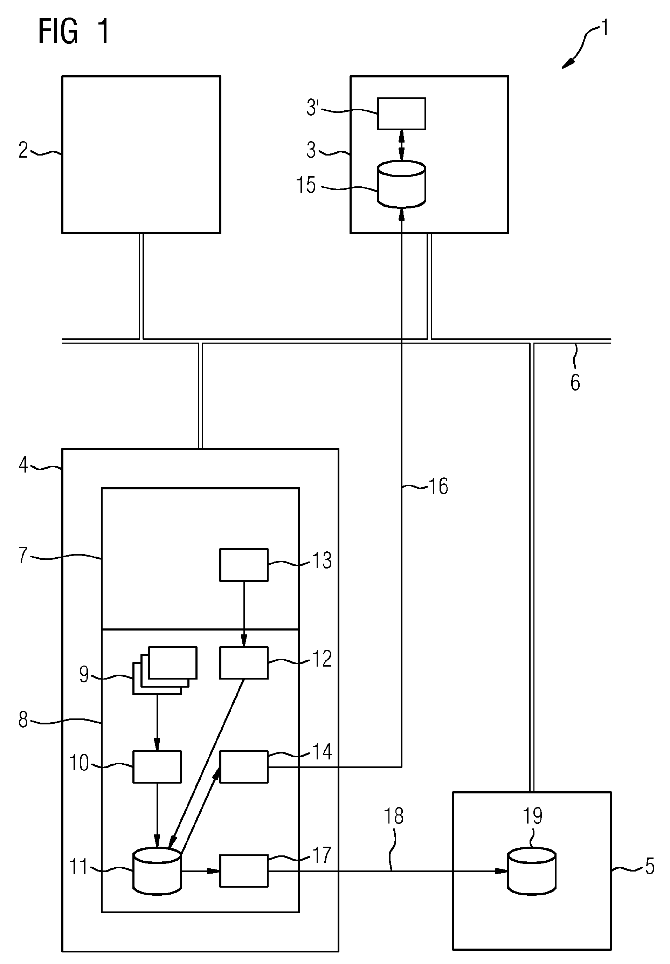

In Figur 1 ist ein Automatisierungsnetzwerk 1 dargestellt, in welchem mehrere Datenverarbeitungsgeräte 2...5 zur Datenkommunikation durch ein Ethernet-basiertes Datennetz 6 miteinander verbunden sind. In dem gezeigten Ausführungsbeispiel ist das Datenverarbeitungsgerät 2 eine so genannte Engineering Station, welche zur Projektierung und Inbetriebsetzung des Automatisierungsnetzwerks 1 dient und im Betrieb des Automatisierungsnetzwerks 1 die Funktion einer Operator Station des Prozessleitsystems übernimmt. Bei dem Datenverarbeitungsgerät 3 handelt es sich um eine Security Station, wobei im Datenverarbeitungsgerät 3 ein Software-Werkzeug 3' abläuft, welches einen Bestandteil eines so genannten Industrial SIEM bildet. Die Datenverarbeitungsgeräte 4 und 5 sind prozessnahe Komponenten, wie beispielsweise eine speicherprogrammierbare Steuerung, die häufig als Controller bezeichnet wird, ein Messumformer zur Erfassung einer physikalischen Variable im zu automatisierenden Prozess, zum Beispiel eines Drucks, oder ein Stellglied zur Beeinflussung des Prozesses in Abhängigkeit einer erfassten physikalischen Variable, zum Beispiel ein Regelventil. Bei dem im Folgenden beschriebenen Ausführungsbeispiel handelt es sich bei dem Datenverarbeitungsgerät 4 um eine speicherprogrammierbare Steuerung und bei dem weiteren Datenverarbeitungsgerät 5 um ein dezentrales Peripheriegerät, welches als verteilte Steuerungselektronik über das Datennetzwerk 6, beispielsweise ein Profinet-Netzwerk, an die speicherprogrammierbare Steuerung 4 angebunden ist.

Die Software des Datenverarbeitungsgeräts 4 ist unterteilt in ein Anwenderprogramm 7 und Firmware 8, die durch den Anwender nicht oder nur mit speziellen Mitteln oder Funktionen veränder- oder austauschbar ist. Zum einen werden verschiedene sicherheitsrelevante Ereignisse 9, häufig als Security Events bezeichnet, in der Firmware 8 des Datenverarbeitungsgeräts 4 erkannt und je nach Konfiguration durch eine Instanz 10, ein so genannter Security-Event-Handler, Meldungen erzeugt, die in einem Speicher 11, einem so genannten Security Event Puffer, im Datenverarbeitungsgerät 4 hinterlegt werden. Zum anderen werden durch eine in der Firmware 8 realisierte Funktion 12 Meldungen bei sicherheitsrelevanten Ereignissen erzeugt, die durch einen Funktionsaufruf 13 aus dem Anwenderprogramm 7 heraus aufgerufen werden kann. Derartige Funktionsaufrufe 13 können bei der Erstellung des Anwenderprogramms 7 flexibel durch Einfügen einer Befehlszeile "SetSecurityEvent()" vorgesehen werden. Hiermit ist es beispielsweise möglich, Parameteränderungen von Reglern automatisierungsseitig als sicherheitsrelevantes Ereignis auszuwerten und durch Erzeugen entsprechender Meldungen das Auftreten des Ereignisses zu dokumentieren. Derartige Funktionsaufrufe 13 werden im Anwenderprogramm 7 vorteilhaft an den Stellen eingesetzt, die beispielsweise für eine forensische Auswertung eventuell von Bedeutung sein können. Da die Funktion 12 zur Erzeugung der Meldungen in der Firmware 8 der Automatisierung implementiert ist, wird eine eventuelle Manipulation deutlich erschwert. Die durch die Funktion 12 erzeugten Meldungen sicherheitsrelevanter Ereignisse werden gemeinsam mit den Meldungen der Instanz 10 im Speicher 11 hinterlegt. Der Inhalt des Speichers 11 kann durch eine weitere Instanz 14, die als Security Event Export oder Syslog bezeichnet wird, exportiert und über das Datennetzwerk 6 in einen SIEM-Server 15 übertragen werden, wie es in Figur 1 durch einen Pfeil 16 symbolisiert ist. Die Meldungen stehen dort für eine spätere forensische Auswertung mittels der Security Station 3 zur Verfügung. Der Export der Meldungen aus dem Speicher 11 gestaltet sich besonders einfach, da sämtliche, im Datenverarbeitungsgerät 4 erzeugte Meldungen im selben Speicher 11 hinterlegt sind.

Darüber hinaus werden die Meldungen durch eine Instanz 17, die als Decentral Periphery Forwarder bezeichnet wird, von dem Datenverarbeitungsgerät 4 zu einem weiteren Datenverarbeitungsgerät 5 über das Datennetzwerk 6 übertragen, wie es in Figur 1 durch einen Pfeil 18 symbolisiert ist. In dem Datenverarbeitungsgerät 5, zum Beispiel einer dezentralen Peripherie, werden die Meldungen in einem Langzeitspeicher 19 dauerhaft hinterlegt. Auf diese Weise wird ein zusätzlicher Ablageort für die Meldungen erhalten, der zum Speicher 11 redundant ausgeführt ist. Die Meldungen der sicherheitsrelevanten Ereignisse können nicht mehr aufgrund einer instabilen Verbindung zwischen Datenverarbeitungsgerät 4 und Security Station 3 oder beispielsweise aufgrund des Ausfalls des SIEM-Servers 15 in der Security Station 3 oder aufgrund einer Überschreitung der Speicherkapazität des Speichers 11 verloren gehen.

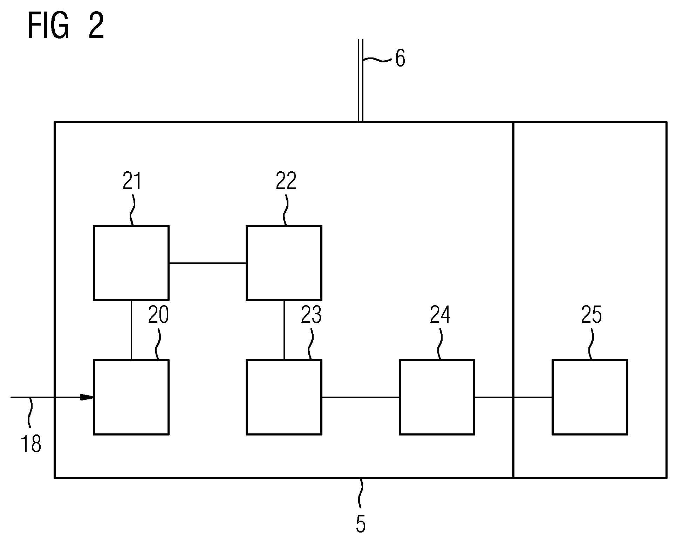

Die zur Ablage der Meldungen im Datenverarbeitungsgerät 5 geschaffene Schnittstellenstruktur ist im Blockschaltbild gemäß Figur 2 genauer dargestellt. Komponenten 20...24 sind in Firmware realisiert, ein Speicher 25 ist als SD-Karte ausgeführt. Zur Kommunikation innerhalb des Automatisierungsnetzwerks ist die Komponente 20, die als "DP/Profinet Com" bezeichnet wird, vorgesehen. Die Komponente 21, als "Events Receiver/Sender" bezeichnet, liest oder schreibt Meldungen von Ereignissen, die aus dem Automatisierungsnetzwerk erhalten werden, über eine als "Authentication" bezeichnete Komponente 22 und eine "Archiving"-Komponente 23 sowie eine "SD-Control"-Komponente 24 in den Langzeitspeicher 25, welcher die Meldungen persistent bewahrt. Die "Authentication"-Komponente 22 stellt sicher, dass die im Speicher 25 zu hinterlegenden Meldungen sicherheitsrelevanter Ereignisse nicht unbemerkt manipuliert werden können, so dass jederzeit gewährleistet ist, dass diese Meldungen tatsächlich von den Datenverarbeitungsgeräten des Automatisierungsnetzwerks stammen. Für eine Umsetzung einer sicheren Speicherung und Verwaltung kryptographischer Schlüssel, die für die Realisierung der "Authentication" benötigt werden, können Basismechanismen verwendet werden, die bereits in der verschlüsselten Datenübertragung bekannt sind. Ebenso kann auf bekannte Weise nach der Übertragung der Meldungen deren Integrität geprüft werden.

Im Folgenden werden noch einmal kurz die mit der Erfindung erzielten Vorteile zusammengefasst:
- Verbesserung der Qualität und Aussagekraft bei der Sicherheitsüberwachung eines Automatisierungsnetzwerks durch die Miteinbeziehung des Anwendungsprogramms in die Erzeugung sicherheitsrelevanter Ereignisse und deren Meldungen,
- vielfältigere, omnipräsente Diagnosemöglichkeiten durch zusätzliche Möglichkeiten, Meldungen sicherheitsrelevanter Ereignisse zu erzeugen und für eine spätere Auswertung zu exportieren, wobei die Auswertung zum einen online beispielsweise in einer Security Station oder zum anderen offline beispielsweise durch ein Programmiergerät mit einem SD-Kartenleser erfolgen kann,
- langfristige Abspeicherung der Meldungen sicherheitsrelevanter Ereignisse in einem eventuell redundant ausgeführten Speicher und
- verbesserte Forensik, da durch die Verteilung und dauerhafte Abspeicherung auch bei Totalverlust einzelner Komponenten des Automatisierungsnetzwerks größere Mengen sicherheitsrelevanter Daten dauerhaft verfügbar sind.

## Patentansprüche

1. Automatisierungsnetzwerk mit einer Sicherheitsüberwachung, wobei in dem Automatisierungsnetzwerk (1) mehrere Datenverarbeitungsgeräte (2...5) zur Datenkommunikation miteinander verbunden sind, wobei zumindest ein Datenverarbeitungsgerät (4) dazu ausgebildet ist, bei sicherheitsrelevanten Ereignissen entsprechende Meldungen zu erzeugen, **dadurch gekennzeichnet, dass** eine Firmware (8) des zumindest einen Datenverarbeitungsgeräts (4) eine durch ein Anwenderprogramm (7) des zumindest einen Datenverarbeitungsgeräts (4) aufrufbare Funktion (12) zur Erzeugung von Meldungen bei sicherheitsrelevanten Ereignissen aufweist und
dass das Anwenderprogramm (7) des zumindest einen Datenverarbeitungsgeräts (4) dazu ausgebildet ist, bei einem sicherheitsrelevanten Ereignis diese Funktion (12) aufzurufen.

2. Automatisierungsnetzwerk nach Anspruch 1, **dadurch gekennzeichnet, dass** ein Speicher (11) in dem zumindest einen Datenverarbeitungsgerät (4) zur gemeinsamen Abspeicherung von Meldungen, die mit Hilfe der Funktion (12) erzeugt sind, und von anderen Meldungen sicherheitsrelevanter Ereignisse vorgesehen ist.

3. Automatisierungsnetzwerk nach Anspruch 1 oder 2, **dadurch gekennzeichnet, dass** das zumindest eine Datenverarbeitungsgerät (4) zur Übermittlung von Meldungen sicherheitsrelevanter Ereignisse an zumindest ein weiteres Datenverarbeitungsgerät (5) ausgebildet ist, welches einen Langzeitspeicher (19, 25) zur Abspeicherung empfangener Meldungen aufweist.

4. Datenverarbeitungsgerät, insbesondere speicherprogrammierbare Steuerung, für ein Automatisierungsnetzwerk (1) nach einem der vorhergehenden Ansprüche, **dadurch gekennzeichnet, dass** eine Firmware (8) des Datenverarbeitungsgeräts (4) eine durch ein Anwenderprogramm (7) des Datenverarbeitungsgeräts (4) aufrufbare Funktion (12) zur Erzeugung von Meldungen bei sicherheitsrelevanten Ereignissen aufweist, und dass das Anwenderprogramm (7) des Datenverarbeitungsgeräts (4) dazu ausgebildet ist, bei einem sicherheitsrelevanten Ereignis diese Funktion aufzurufen.

5. Verfahren zur Überwachung der Sicherheit eines Automatisierungsnetzwerks (1), in welchem mehrere Datenverarbeitungsgeräte (2...5) zur Datenkommunikation miteinander verbunden sind, wobei zumindest ein Datenverarbeitungsgerät (4) bei sicherheitsrelevanten Ereignissen entsprechende Meldungen erzeugt, **dadurch gekennzeichnet, dass** ein Anwenderprogramm (7) des zumindest einen Datenverarbeitungsgeräts (4) bei einem sicherheitsrelevanten Ereignis eine Funktion (12) aufruft, die in einer Firmware (8) des Datenverarbeitungsgeräts (4) zur Erzeugung einer dem Ereignis entsprechenden Meldung implementiert ist.

6. Computerprogramm mit durch einen Computer ausführbaren Programmcodeanweisungen zur Implementierung des Verfahrens nach Anspruch 5, wenn das Computerprogramm auf einem Computer ausgeführt wird.

7. Computerprogrammprodukt, insbesondere Datenträger oder Speichermedium, mit einem durch einen Computer ausführbaren Computerprogramm gemäß Anspruch 6.
